# EUROPEAN PATENT APPLICATION

(11) **EP 1 850 207 A1**
(43) Date of publication of application: **31.10.2007**
(21) Application number: 05781766.0
(22) Date of filing: 30.08.2005
(51) Int. Cl.: G06F 3/023

(54) **A KEYBOARD USED IN THE INFORMATION TERMINAL AND ARRANGEMENT THEREOF**

(30) Priority: 01.09.2004 CN 200410074017; 28.02.2005 CN 200510007396
(71) Applicant: Zhang, Li, Beijing 100071 (CN); Sun, Tao, Nanshan District Shenzen Guangdong 518004 (CN); He, Wei, Haidian District Beijing 100082 (CN); Zhang, Weili, Fengtai District Beijing 100071 (CN)
(72) Inventor: Zhang, Li, Beijing 100071 (CN)
(74) Representative: Jacobi, Markus Alexander
(86) International application number: PCT/CN2005/001364
(87) International publication number: WO 2006/024228

(57) **Abstract**

A keyboard used with information terminals/devices and key arrangement on the keyboard. The keyboard comprises a high click frequency key group chain consisting of at least four of the five vowel keys and the 'N' key. Within the key group chain, each member key is next to at least one another member key along a row or along a column. The five vowel keys are A, E, I, O, U. The keyboard can be operated by a single hand, and can have an alphabet input region with 4 to 6 columns of keys, depending on the particular usage requirement, but still maintain a same central module. The keyboard is convenient for inputting Chinese phonetic letters and alphabets of Western languages.

## Description

### FIELD OF THE INVENTION

The present invention relates to a general keyboard and key arrangement thereon for desktop and portable computers, handheld devices and information terminals and their peripheral devices for text and information input and control, which may be implemented as a hardware keyboard having physical keys or as a software keyboard to display on a terminal touch screen or monitor.

### BACKGROUND OF THE INVENTION

Entering into the 21 st century, human society is stepping into a brand-new electronic information era. With rapid deployment of wired and wireless internet computer terminals, mobile information cell phones, household information devices and TV terminals, the design of keyboard, which is an important input means for all those informational devices, is facing challenges and urgent demand for fundamental changes, because the conventional keyboard design is lagged-behind in application form and structural arrangement. In the upcoming information-based society, inputting information with a keyboard will be with us in various social or non-office settings. Obviously, the keyboard used in social settings and everyday life must have a different design from that used by professional typewriters. For most people, inputting with a single hand in the "chicken-picking-rice" type of style using a single finger or multiple fingers pressing the keys on a keyboard is still an acceptable way in non-office settings. At the present time, however, whether it is for professional typewriters or it is not for those not so-harried retirees, the keyboard is all the same old desktop style, i.e., a general-purpose keyboard in the traditional horizontal arrangement that requires operation with both hands. Such keyboard still inherits the essential structure of "QWERTY" key arrangement invented by Sholes in 1868. Since the first mechanical typewriter with a keyboard having 26 Latin alphabet-keys in the "QWERTY" arrangement appeared in 1873, people have kept on renovating the key arrangement on the keyboard, driven by social and technical progresses. There have been many design improvements and renovations on the keyboard. For example, Dvorak invented DUORAK keyboard in 1936 and an "XPeRT" keyboard was disclosed in patent application no. PCT-CA03-01461 in 2003. As the result, the notion of typing with both hands on the keyboard has been reinforced constantly. Due to the advance of technology and the arrival of information-based society, people demand more for the keyboard, the essential interface for information transmission and man-machine interaction. All kinds of fixed, portable, and handheld mobile information terminals produced with modern technology have an urgent need for a keyboard that is efficient, easy-to-use, and operable with a single hand and thumb. In the last 20 years, many people invented general-purpose keyboards that can be operated with a single hand, for example, the keyboard disclosed in the China utility model patent CN86203165 in 1986, the keyboard disclosed in US patent 5059048 in 1991, the keyboard disclosed in US patent 5367298 in 1994, and the keyboard disclosed in China patent CN02135635 in 2002, etc. All of the patents disclosed general-purpose keyboards with new arrangements of alphabet-keys, to improve input efficiency and enhance mobility. However, those general-purpose keyboards have their drawbacks: the key arrangement was not based on sufficient scientific analysis on the keys' usage frequency data, with no consideration of the thumb operation and peculiar issues involved in inputting Chinese characters - the language used by the largest population in the world, much less consideration given to the tone marks in Chinese phonetic input and tone/accent marks appeared in letters of French, German, Spanish, and Esperanto, etc. Those problems are considered as severe drawbacks in the key arrangement of the conventional keyboard. So far, there still lacks a careful coordination for information input with keyboard to deal with the diverse languages coexisting in the world, nor are there considerations for establishing a set of core keys and for modularizing key groups for making convenient and flexible combinations of alphabet-keys on the keyboard so as to adapt to different terminals and devices.

### DESCRIPTION OF THE INVENTION

The object of the present invention is to provide a keyboard and the key arrangement thereof, which can be installed in modern information terminals, such as desktop computers, laptop computers, web TV terminals, mobile telephones, fixed telephones, computer dictionary, standalone keyboards, remote controller, etc. and related peripheral devices, and which can be operated with a single hand and a thumb, meet ergonomic requirement and be suitable for using in non-office settings. The keyboard can be flexibly designed to have an alphabet input region with four, five, or six columns based on the particular usage and the shape of the information device or terminal, but still keep the key arrangement of a core key-group unchanged so that the user doesn't need to learn a new arrangement for the keys in the core group when the user moves from one keyboard design to another design of the present invention. With the keyboard of the present invention, the user can input smoothly and efficiently with short distances of finger movement, and can input conveniently both the Chinese phonetic alphabet and those of a Western language.

The basis of the technical solution of the present invention is described in the following.

In order to overcome the drawbacks of the conventionaL keyboard, it is necessary to learn, study, and find the rules of different languages in keyboard input, find out the common features of those languages and features of the key arrangement for those languages, and investigate and analyze the rules in key usage in inputting Chinese and Western letters and the characteristic of letter chains. Then based on these studies and analyses, a keyboard generally applicable to information terminal and their peripheral devices is designed.

Accordingly, the inventor of the present invention analyzed the rules of structural composition of the Chinese phonetic alphabet as used in "phonetic conversion" for inputting Chinese characters. Among the 26 Latin letters used for Chinese phonetic letters, 25 are identical to those of used in English letters, and the remaining different one is "Ü", which can be substituted with the letter "V" for input on the keyboard. In the Chinese phonetic alphabet, some letters that can be used for the initial of a syllable are called the initial consonants, and there are altogether 23 initial consonants in the Chinese phonetic alphabet. The remaining letters that are not used in the initial position but only follow initial consonants are referenced as the vowels of Chinese syllables. Among the vowels, the letters' I ', 'U', and 'U' are normal vowels (i.e., they cannot be a component of a compound vowel and cannot start a syllable as a special initial consonant), while the other vowels 'A', 'E', and 'O' , in addition to being used as a normal vowel or as a component of a compound vowel, can be used as a special initial consonant, i.e., in a situation where there is no initial consonant and the syllable starts directly with a vowel of this special 'A', 'E', and 'O' group. 'N' and 'G" are special initial consonants. Not only each of them by itself can be used as an initial consonant but they can also be used together to form the terminal part of a compound vowel. 'N' can be used with 'A', 'E', ' I ', and 'U' to form compound vowels of Chinese syllables. 'N' followed by 'G' will form the 'NG' terminal combination, which can be further used with 'A', 'E', ' I ', 'O', and 'U' to compose a variety of compound vowels of Chinese syllables. Statistics show that, in the Chinese phonetic alphabet, the usage percentages of the letters are (from high to low): 'I': 12.5, 'N': 11.0, 'A': 10.2, 'E': 9,5, 'U': 7.6, 'H': 6.7, 'G': 6.0, 'O': 5.3, 'D': 3.8, 'S': 3.0, 'Y'; 3.0, 'Z': 2.7, 'J': 2.0, 'M': 1.9, 'W': 1.8, 'L': 1.6, 'T': 1.5, 'R': 1.5, 'X': 1.3, 'C': 1.3, 'B': 1.2, 'Q': 1.1, 'K': 0.7, 'F: 0.4, 'P': 0.3, and 'V': 0.1. The first 12 letters account for 83.3% of clicks in Chinese phonetic letters, where letter T in the first place accounts for the highest click rate at 14.5%, while letter 'N' in the second place accounts for 11 %. Analyses further show: 'N' takes an important role of a "linkage" in the chains of Chinese phonetic letters; 'G' always follows 'N' and is located with 'N' at the terminals of the letter chains of Chinese phonetic alphabet, except when 'G' appears in the initial position as a single initial consonant; 'H' is one of the letters that is part of the three commonly used double-letter initial consonant 'ch', 'sh', and 'zh', and also takes an important role in the Chinese phonetic alphabet.

The present invention also takes full consideration of the characteristics and rules of English letters input in key arrangement on the keyboard. Statistics show that, in the 26 Latin letters used in English language, the usage percentages are (from high to low): 'E': 12.2, 'O': 9.4, 'T': 9.2, 'A': 8.9, 'I': 7.9, 'N': 7.4, 'S': 7.0, 'R': 6.4, 'H': 4.5, 'L': 4.1, 'D': 3.2, 'C': 2.9, 'U': 2.6, 'M': 2.3, 'W': 2.3, 'F': 1.9, 'Y': l .8, 'G': 1.8, 'B': 1.2, 'V': 1.0, 'P': 1.0, 'K': 0.5, 'X': 0.3, 'J': 0.1, 'Q': 0.06, and 'Z': 0.04. The first 12 letters account for 83.1 % where 'E' in the first place accounts for the highest click rate 12.2%, while 'O' in the second place accounts for 9.4%. Analyses show: consonant letter 'N' has a close relation of adjacency and syllable separation with vowel letters 'A', 'E', 'I', 'O', and 'U'; consonant letter 'H' takes an important role in English linked letters, such as the 'ch', 'sh', 'th', and 'wh' prefix combinations. In the invention, commonly used affixes and letter combinations in English language are given consideration in key arrangement for helping mind retention.

The key arrangement of the present invention also takes full consideration of the characteristics and rules of input of letters with accent marks used in languages such as French and Germany. For example, in French, there are five syllabic marks, besides 26 Latin letters, and there are a dozen of the French letters having such marks. Statistics show: in French language, the percentages of use of letters are (from high to low): 'E': 14.9, 'S': 9.6, 'A': 8.2, 'I': 7.3, 'N': 7.2, 'R': 6.6, 'U': 6.5, 'T': 6.5, 'L': 5.5, 'O': 5.2, 'P': 3.4, 'D': 3.4, 'M': 2.8, 'C': 2.6, 'V': 1.8, 'F': 1.3, 'Q': 1.0, 'B': 1.0, 'J': 1.0, 'G': 0.8, 'X': 0.6, 'H': 0.5, 'Y': 0.25, 'K': 0.05, 'W': 0.0, and 'Z': 0.0. The first 12 letters account for 84.3% click percentage, where 'E' in the first place accounts for 14.9%, while 'S' in the second place accounts for 9.6%. The click rate of the letters with accent marks accounts for about 2%, and those letters are assigned to symbol keys and number keys on the convention keyboard. To implement keyboard input of the four major tone marks in Chinese phonetic alphabet and letters with tone/accent marks in western languages, the present invention utilizes dedicated alphabet-keys for tone/accent marks on the keyboard.

By combining the click percentages of letters as used in Chinese, English, and French languages, the mean click percentages of the letters are (from high to low): 'E': 12.2, 'I': 9,9, 'A': 9.1, 'N': 8.5, 'O': 6.6, 'S': 6.5, 'T': 5.7, 'U': 5.6, 'R': 4.8, 'H': 3.9, 'L': 3.8, 'D': 3.5, 'G': 2.9, 'M': 2.4, 'C': 2.3, 'Y': 1.7, 'P': 1.6, 'W': 1.4, 'F': 1.2, 'B': 1.1, 'J': 1.0, 'V': 0.9, 'Z': 0.9, 'X': 0.7, 'Q': 0.7, 'K': 0.4, and letters with tone/accent marks: 0.7%; where the first 16 letters account for 89.4% ; letter 'E" in the first place accounts for 12.2%, and letter 'I' in the second place accounts for 9.9%.

As the basis of the present invention, it is very important to find out the frequencies of use of phonetic letters and sequential structure of letter chains in Chinese phonetic alphabet as well as the frequencies of use of phonetic letters and sequential structure of letter chains in western languages (typically English and French), analyze the common features and correlation in phonetic letter input between Chinese and western languages, and find out the letters with high frequency of use in Chinese, English, and French languages. On that basis, the main feature of the present invention is to make the central and rational arrangement for the first sixteen alphabet-keys 'E', 'I', 'A', 'N', 'O', 'S', 'T', 'U', 'R', 'H', 'L', 'D', 'G', 'M', 'C', and 'Y' of the above list, where due consideration is given to the arrangement of the three consonant keys 'N, 'G', 'H' and five vowel keys 'A', 'E', 'I', 'O', and 'U' to derive a arrangement of keys that can be easily and conveniently shared for inputting both the Chinese and Western languages.

The present invention provided a technical solution on the basis of electronic information technology, through investigation, analysis, and application of rules in use of Chinese phonetic letters and western language letters (typically English).

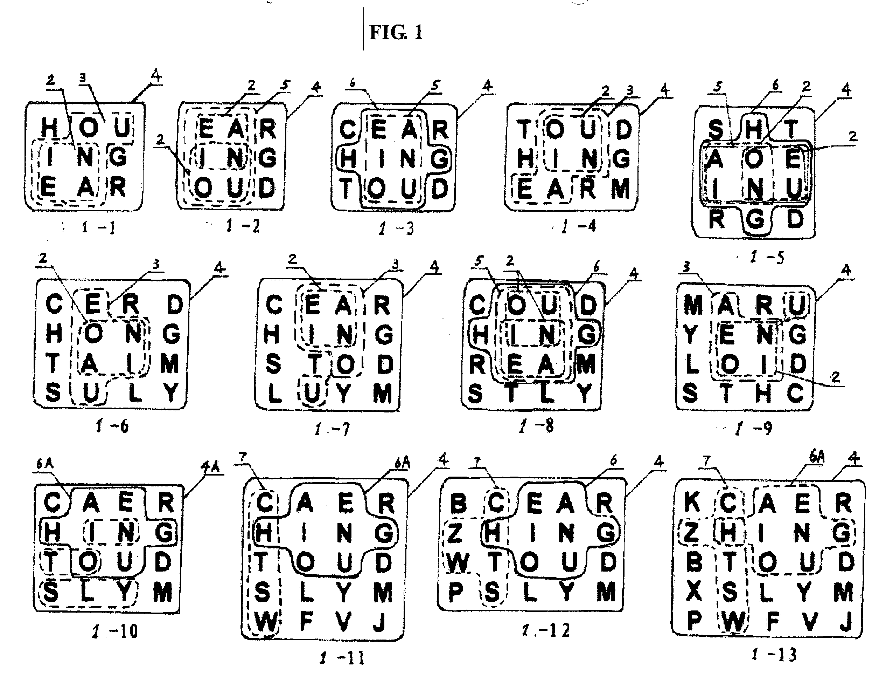

As the result, the inventor has invented a keyboard used in information terminals/devices. The keyboard has an alphabet input region **1,** which comprises at least a central module **4** and a dissociable marginal module **8.** The central module contains keys of high frequency usages while the marginal module is for keys of low frequency usages. The central module contains a high frequency key group chain **3** (see FIG. 1-1), which comprises at least four of the five vowel keys (A, E, I, O and U) plus the 'N' key. Within chain group **3,** there are at least five keys, which are linked with another member of the group (either linked on the same row or on same column). Unless otherwise specified, in this application, the terms "linked," "next to," or "adjacent to" are used interchangeably. The 'G' key is adjacent or next to the 'N' key.

In the high frequency key group chain **3** of the input region, a 2×2 key matrix may be formed with three vowel keys and the 'N' key, referred to as the core key group **2** (FIG. 1-1). Key 'G' is adjacent to key 'N' of the core key group; key 'H' may be in the same row or column with keys 'N' and 'G".

In the alphabet input region **1,** there may be a double-letter consonant key group chain **7,** where there are at least four of the five alphabet-keys 'S', 'T', 'C', 'Z', 'W' plus key 'H'. Within group **7,** there are at least five keys, each of which are linked with another member of the group (either linked on the same row or on same column) and keys 'H' and 'N' are either on the same row or on the same column, directly linked or separated by one another key.

In the alphabet input region **1** or in the high frequency key chain group **3,** the five vowel keys 'A', 'E', 'I', 'O', and 'U' may be linked to form a "C" shape, embracing key 'N' in the opening of the "C" shape and forming a 3×2 core key group complex 5. At the opening of the "C" shape, key 'N' may be linked to key 'G'; key 'H' may be located in the opposite side of the opening of the "C" shape, but in the same row with keys 'N' and 'G', separated by a vowel key, forming center zone 6 with eight alphabet-keys (FIG. 1-3).

In the alphabet input region **1,** one of keys 'E' and 'A' may be held in the location between key 'R' and the other key of keys 'E' and 'A'. Keys 'L', 'Y', and 'M' may be linked together on the same row and/or on the same column and at least four of keys 'Z', 'K', 'B', 'X', and 'P' may be linked together on the same row and/or one the same column.

Center module 4 may be a 4×4 key matrix on the keyboard. One particular central module, referenced as **4A,** is defined by: first row: 'C', 'A', 'E', and 'R'; second row: 'H', 'I', 'N', and 'G'; third row: 'T', 'O', 'U', and 'D'; fourth row: 'S', 'L', 'Y', and 'M'.[4]. Central module 4 or **4A,** together with a marginal dissociable module **8,** and tone/accent mark key group chain 9, can constitutes a number of different configurations of the alphabet input region 1, which is at least of 4 rows and 4 columns.

In a particular embodiment, there is a 7×4 alphabet input region 1A, which is composed as follows: first row: 'Z', 'B', 'X', and 'P'; second row: 'C', 'A', 'E', and 'R'; third row: 'H', 'I', 'N', and 'G'; fourth row: 'T', 'O', 'U', and 'D'; fifth row: 'S', 'L', 'Y', and 'M'; sixth row: 'W', 'F', 'V', and 'J'; seventh row: 'K', space, space, and 'Q'.

In a particular embodiment, there is a 6×5 alphabet input region **1B** with the four keys of tone/accent mark key group chain **9**: first row: 'Z', 'K', 'B', 'X', and '**P**'; second row: 'C', 'A', 'E', 'R', and '-'; third row: 'H', 'I', 'N', 'G', and '/'; fourth row: 'T', '0', 'U', 'D', and 'v'; fifth row: 'S', 'L', 'Y', 'M', and '\'; sixth row: 'W', 'F', 'V', 'J', and 'Q'.

There may be two state-locking keys **15,** i.e., "Shift Lock" and "Caps Lock," and a mouse device **14** peripheral to the alphabet input region **1.**

The method of the present invention relates to the arrangement of alphabet-keys on the keyboard with Latin keys assembled to the information terminal and peripheral device in the form of hardware or presented on the screen by means of software (also referred to as "soft keyboard"). Specifically, the method calls for an alphabet input region **1,** which has a high click frequency alphabet key group chain 3. The key chain group 3 contains at least four of the five vowel keys 'A', 'E', 'I', 'O', 'U' plus key 'N', where there are at least five keys that are linked with another member of the group either on the same row or on the same column. The keyboard may also has a double-letter consonant key group chain **7,** which contain at least four of the five alphabet-keys 'S', 'T', 'C', 'Z', 'W' plus key 'H'. In group **7,** at least five of the keys are linked with another member of the group either along a same row or along a same column. The input region **1** comprises two parts: (a) the core key model **4** in the form of an n x m matrix (n and m are independently 3, 4, or 5), within which key chain group 3 is located, and (b) a dissociable marginal module **8.** These two parts (modules **4** and **8**), together with any tone/accent mark keys of group 9 as needed, to form a key matrix with at lest four rows and four columns. In a particular embodiment, modules 4 (or 4A) and 8 plus four tone/accent mark keys form an input region IB comprising 30 keys in a 6 x 5 matrix, or an input region ID in a 5 x 6 matrix.

The main ideas of the present invention in making the key arrangement on a keyboard are described as follow:
1. In the present invention, the 26 Latin keys in the alphabet input region **1** of the general keyboard are divided into two parts: one part is a rectangular, in the form of a matrix with a plurality of rows and columns of keys, referenced as central module **4** with keys of high click frequency; the other part is marginal key strips (i.e., rows or columns of keys), which are dissociable marginally or peripherally located key group **8** with keys of low click frequency. The key strips are situated around the core key group. The central module may be an n (row) × m (column) key matrix (n and m may be independently 3, 4, or 5), having a total of 9 to 25 alphabet-keys with high click frequency. This key matrix features high click frequency keys, and is advantageous for smooth and efficient inputting and facilitating mind retention of the key positions. Once the matrix structure, member key selection, and key arrangement of the central module are decided, they may be finalized as the standard for a serial of the products, which will then all have a uniform input key module **4** across the product line or serial so that once the user becomes familiar with the core key arrangement in the central module of one product will be familiar with the counterpart of another product in the serial. The marginal key-group **8** contains the remaining of the 26 keys which are not in the central module 4 (number is 26 minus (n×m), where n and m are independently 3, 4, or 5) and is positioned around the central module **4** in a plurality of strips of keys as required. Their arrangement in a particular situation depends on the specific design requirement of the alphabet input region **1.** Thus, the letter input area of the keyboard has at least n rows and m columns of keys (n and m being independently 3, 4, or 5). As a result, when the user encounters any keyboards in a product serial with a uniform core key group arranged according to the present invention, he or she can quickly become familiar with use of the keyboard if he/she is already familiar with the central module key arrangement in another product of the same serial.
2. To provide a keyboard that can be used in the information terminal in a comfortable and non-office setting by operating with a single hand or holding the information terminal with one hand or both hands and operating the keyboard with the thumbs, the number of key columns in the letter input area should not be too many, preferably 4-6. Therefore, the keyboard shall be limited to have a letter input area with 4 key columns as the minimum; optimally, the central module shall be a 4 x 4 matrix or 3 x 4 matrix, for housing sixteen or twelve high click rate alphabet-keys, respectively. Either of two central key module arrangements should account for at least 70% of the key clicks with both Chinese and Western languages. The central module key arrangement shall be kept uniform and fixed once it is accepted by business users and the general public. The remaining alphabet-keys with low click rates may be positioned around the central module as the marginal keys, in any specific arrangements as required.
3. The design of the keyboard should take comprehensive consideration of letter click rate in Chinese and western languages (typically English) and make the key arrangement in accordance with the importance of the keys. The top ten letters of highest click rates in Chinese, English, and French languages come from the five vowel letters 'A', 'E', 'I', 'O', and 'U' and eight consonant letters 'N', 'H' 'G', 'R', 'S', 'T', 'L', and 'D'. In the three languages, 'A', 'E', 'I', 'N' always appear as the top six letters of highest click frequency. They, together with 'O', 'U', 'H', 'S', 'T', and 'R', are the ten letters of the most important ones, and should be located at positions that can be accessed most easily in the central part on the keyboard. Vowel letters 'A', 'E', 'I', 'O', and 'U' and letter 'N' are core key-group letters among the above important letters, accounting for 58.1 % click rate in Chinese, 48.2% in English, 49.3% in French, and 51.8 mean click rate in the three languages altogether. In the present invention, at least four of the five vowel keys 'A', 'E', T, 'O', and 'U' together with key 'N' are chosen to form the core key group chain **3** with high click frequency, which contains at least 5 keys and at most 6 keys and each member of the chain is linked with (that is, next to) another member of chain either on the same row or on the same column. In chain **3,** 'A', 'E', ' I ', and 'N' are the most frequent letters, accounting 39.6% mean click rate in the three languages altogether.
4. In the alphabet input region 1 and the central module **4,** the key arrangement shall be made in accordance with each letter's hierarchy of importance. In the central module, the five English vowel keys 'A', 'E', 'I', 'O', 'U' with top click frequencies should have proper horizontal linkages with the consonant keys 'N', 'S', 'T', 'H', 'G', and 'R', in accordance with formation of prefixes to promote mind retention. The keys on the most inner group shall be a 2×2 matrix, which is the core key group **2,** composed by consonant key 'N' and any three of the five vowel keys. The next zone should comprise core key group complex 5, arranged in a "C" shape with the vowel keys 'A', 'E', 'I', 'O', and 'U' embracing the consonant key 'N' in the opening of the "C" shape, or high frequency alphabet-key group chain **3,** which comprises at least four of the five vowel keys and has at least 5 keys and at most 6 keys, where each member of the chain is linked with another member of chain either on the same row or on the same column. The third zone should be the central zone **6** of the central module **4,** composed by the five vowel keys 'A', 'E', ' I ', 'O', and 'U' and the consonant keys 'N', 'G', and 'H'. The letter click rate of keys in the central zone accounts for 70.8% in Chinese language, 54.7% in English language, and 50.6% in French language, and the mean letter click rate in the three languages altogether is 58.7%.
5. The alphabet-keys on the keyboard should be arranged according to the principles that facilitate easy comprehension and mind retention of the key positions and smooth operation with fingers, avoid frequent long-range movements of fingers and blocking of the keys, and minimize the moving distance of fingers. In the alphabet input region **1,** letters in word roots and affixes shall be linked horizontally as far as possible, to form alphabet-key rows that can be memorized easily. Key 'H' shall be arranged near 'S', 'T', 'C', 'W', and 'Z', to form the double-letter consonant key group chain **7,** which has at least five alphabet-keys linked either on the same row or the same column. Key 'G' should be arranged adjacent to key 'N' in high frequency alphabet-key group chain **3.** Key 'H' in key group chain **7** should be arranged directly adjacent to key 'N' or in the same line with 'N' and 'G', separated only by one vowel key.
6. If the two columns, where key 'H' and key 'N' are situated, respectively, are separated by another column, this in-between column should have two to four vowel keys in a linked serial, so that those vowel keys together with 'N' and 'G', form a easy-to-identify consonant key groups in Chinese phonetic alphabet. The vowel key serial may be inserted by a non vowel key only when there are only three vowel keys in said column. For example, in central zone **6,** there is a column between 'H' and 'N', which have three vowel keys in a serial.
7. The alphabet input region should be designed in accordance with ergonomic requirements. A keyboard designed for operating with a single hand should be in principle designed primarily for operating with right hand and thumb, with five alphabet key columns in the input area. When necessary, it may be narrowed to a slimmer form with four alphabet key columns or broadened to a wider form with six alphabet key columns, so that the keyboard can be used with multiple fingers or used with a single finger, single thumb, or both thumbs. In alphabet input region **1,** the diagonal sector area , which refers to the area that are covered by the thumb in a windshield wiper like movement from upper right to lower left, should contain alphabet-keys with high click frequency, such as 'E', 'A', ' I ', 'N', 'O', 'S', 'T', 'U', 'R', and 'H', while central module **4** with a high frequency alphabet-key group chain 3 should be always in a zone favorable for thumb operation.
8. For the purpose of inputting Chinese (phonetic input), French, German, Spanish, and Esperanto, etc., the four keys with tone/accent marks (key group chain 9) should be added to the alphabet input region **1,** thus exceeding the limit of 26 Latin keys in the traditional alphabet key area, and turning the alphabet input region into a rectangular key matrix of 6x5 or 5x6 with 30 alphabet-keys. This arrangement thus makes the keyboard a general keyboard that can be used to conveniently input letters in a variety of languages and meet global usage demand. In actual applications, the keyboard can be made by utilizing existing software and hardware and choosing existing symbol keys that are not so important or being used to implement alphabet-keys with a tone/accent mark. For example, key "[{" can be utilized to represent high level tone (-) in Chinese pronunciation and letter 'Ä' in German; key "]}" can be utilized to represent the rising tone (/) in Chinese pronunciation and letter 'Ü' in German; key "'~"can be utilized to represent the third tone 'v' in Chinese pronunciation and letter 'ë' in German; key '\|" can be utilized to represent the falling tone '\' in Chinese pronunciation and letter 'ö' in German; for a keyboard dedicated to English, new functions or other important symbols can be assigned to the above four keys.
9. For a keyboard usually used with the right hand, the alphabet input region 1 in the keyboard operation panel can be positioned in the lower part of the keyboard, to facilitate the thumb to touch and operate. The number key area can be positioned above the alphabet input region or left to the alphabet input region, or at the opposite side of the terminal. In some cases, for operation with both hands or left hand, two sets of the alphabet input region 1 and the central module **4** can be used and can be positioned in mirror to each other symmetrically. Furthermore, in order to reduce the keyboard area, the number keys can be implanted in the space between the alphabet-keys or by sharing keys with the alphabets by means of the shift key.
10. Keyboard and mouse control device have become an integral part of the man-machine interface for any modern information terminal, and the importance of the mouse is even more than the keyboard. With modern manufacturing techniques, the mouse clicking device can be made as small as the area of several keys, making it possible to make the mouse device as part of a keyboard package. New portable terminals require combining keyboard and mouse device into an integrated keyboard assembly. To meet this demand, the position of mouse device on the keyboard must be taken into consideration in the keyboard design. In the present invention, for easy operation with the right thumb and improve comfortableness of the operation, a mini or micro mouse controller and auxiliary keys are arranged in lower part or at lower right corner of the keyboard as far as possible. In some embodiment, the mouse controller can also be placed on the top of the keyboard, for example, on a mobile phone.

For a keyboard embedded in an information terminal or a peripheral device separated from the information device, the present invention can utilize the software/hardware keyboard techniques used in modern mobile phones, notebook computers, and separate peripheral devices. With the current keyboard IC chipset and USB interface technique, the present invention integrates a mouse device as an accessory on the keyboard, to implement an integrated keyboard for man-machine interaction platform.

The keyboard provided in the present invention has the following features:
1. In the alphabet input region 1 where the keys are arranged in straight lines within a matrix, the alphabet key group chain **3** comprises at least four of the five vowel keys **'A',** 'E', 'I', 'O', and 'U' plus key 'N' where at least five keys are linked in the same row or the same column and key 'G' is adjacent to key 'N' in that chain. The alphabet input region 1 comprises at least a central module **4** of high click frequency and marginal dissociable key group module **8** of low click frequency.
2. In high frequency alphabet-key group chain 3, at least three vowel keys together with key 'N' form a 2×2 core key group **2** and key 'G' is adjacent to key 'N' in core **2** and key 'H' is in the same row or in the same column with key 'N' and key 'G".
3. In the alphabet input region 1, double-letter consonant key group chain **7** comprises at least four of the five alphabet-keys 'S', 'T', 'C', 'Z', **'W'** plus key 'H', in which at least five keys are linked with another member of group in the same row or in the same column. In key group chain **7,** key 'H' is directly adjacent to, or separated by only one key from, key 'N' in the same row or in the same column.
4. In high click frequency key group chain **3,** five vowel keys 'A', 'E', ' I ', 'O', and 'U' are positioned around key 'N' to form a "C" shape, embracing key 'N' in the opening and forming two overlapping core key groups **2,** which share a vowel key and key 'N' (FIG. 1-8). These two overlapping core key groups are together referenced as core key-group complex **5,** containing six alphabet-keys.
5. At a side of core key-group complex **5,** 'G' is adjacent to key 'N' at the opening of the "C" shape, and key 'H' in the same straight line with the linked keys 'N' and 'G' but separated by a vowel key (either 'A', 'E', 'I', 'O', or 'U') and is opposite to the opening of the "C" shape. Together the eight keys 'A', 'E', ' I ', 'O', 'U', 'N', 'G', and 'H' form the central zone **6**.
6. In the alphabet input region **1,** one of keys 'E' and 'A' is held between key 'R' and the other of keys 'E' and 'A', resulting in the arrangement of ('E', 'A', 'R') or ('A', 'E', 'R') in the same row. Keys 'L', 'Y', and 'M' are linked in group and at least four of keys 'Z', 'K', 'B', 'X', and 'P' are linked group.
7. In the alphabet input region **1,** there are 16 alphabet-keys with highest click frequencies ('E', 'I', 'A', 'N', 'O', 'S', 'T', 'U', 'R', 'H', 'L', 'D', 'G', 'M', 'C', and 'Y'), forming a 4 × 4 key matrix central module **4.** A preferred arrangement of this module is: first row: 'C', 'A', 'E', and 'R'; second row: 'H', ' I ', 'N', and 'G'; third row: 'T', 'O', 'U', and 'D'; fourth row: 'S', 'L', 'Y', and 'M'. This particular embodiment is referenced as key-group module **4**A, which together with marginal dissociable key group module **8** constitutes the alphabet input region **1,** which has at least 4 rows and 4 columns and can be in a variety of configurations.
8. The keyboard input area can be a 7×4 alphabet key matrix: first row: 'Z', 'B', 'X', and 'P'; second row: 'C', 'A', 'E', and 'R'; third row: 'H', 'I', 'N', and 'G'; fourth row: 'T', 'O' 'U', and 'D'; fifth row: 'S', 'L', 'Y', and 'M'; sixth row: 'W', 'F', 'V', and 'J'; seventh row: 'K', space, space, and 'Q'. This key arrangement of the input area is suitable for being used on handheld information devices. 'K' and 'Q' keys can be in the bottom row or the top row. When they are in the bottom row, the space key may occupy the area of two keys and be placed in the middle or at either side of the row.
9. The keyboard input area may be a 6 x5 alphabet key matrix, together with four keys of tone/accent mark key group 9. For the Chinese phonetic input method, an input ends with a consonant key. Therefore, the best position for the tone/accept mark keys is at the right side the central module 4. The standard and a preferred alphabet keys area is arranged as follows: first row: 'Z', 'K', 'B', 'X', and 'P'; second row: 'C', 'A', 'E', 'R', and '-'; third row: 'H', 'I', 'N', 'G', and '/"; fourth row: 'T', 'O', 'U', 'D', and 'v'; fifth row: 'S', 'L', 'Y', 'M', and '\'; sixth row: 'W', 'F', 'V', 'J', and 'Q', which forms a preferred 6 x 5 key matrix alphabet input region **1B,** with total 30 keys. Of course, the keys may also be arranged in other various different ways as necessary.
10. The alphabet input region can also be a 6×5 alphabet-key matrix with the following key arrangement, referenced as **1C:** first row: 'K', 'C', 'A', 'E', and 'R'; second row: 'Z', 'H', 'O', 'N', and 'G'; third row: 'B', 'S', ' I ', 'U', and 'D'; fourth row: 'X', 'T', 'L', 'Y', and 'M'; fifth row: 'P', 'W', 'F', 'V', and 'J'; sixth row: '-', '/', 'v', '\', and 'Q'; with the rows and columns well aligned to each other. In this arrangement, the placement of the double-letter initial consonants 'zh', 'ch', and 'sh' is symmetric relative to the central line, which is suitable for learning and inputting Chinese characters. For example, the second row "ZHONG" is the phonetic letters for Chinese character " 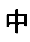 " of the word " 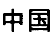 " and can help the user to master the standard pronunciation.
11. The alphabet input region can also be another 6×5 alphabet-key matrix, implemented through turning the top row in the 6×5 alphabet input region 1B into the leftmost column of the new matrix: first row: 'Z', 'C', 'A', 'E', and 'R', '-'; second row: 'K', 'H', ' I ', 'N', 'G', and '/'; third row: 'B', 'T', 'O', 'U', 'D', and 'V' ; fourth row: 'X', 'S', 'L', 'Y', 'M', and '\'; fifth row: 'P', 'W', 'F', 'V', 'J', and 'Q'; with the rows and columns well aligned to each other, resulting in a 5×6 alphabet input region 1D with 30 keys. 1D takes consideration of inputting both Chinese and Western languages.
12. The alphabet-keys with tone/accent marks (key group chain 9) in the keyboard are selected from the existing symbol key group of the traditional general-purpose keyboard. The four tone/accent mark keys are: key '[{' for the high and level tone (-) in Chinese pronunciation; key ']}' for the rising tone (/) in Chinese pronunciation; key "~' for the third tone (v) in Chinese pronunciation; and key '\|' for the falling tone (\) in Chinese pronunciation. With the assistance of the three function keys Shift Lock, Caps Lock, and Alt Lock and the default letter assignment on the keys, each tone/accent mark key can produce at least four letters with tone/accent marks in any given language input mode. In other words, the keyboard can produce at least 16 letters with tone marks.
13. The two-state locking keys in key group 15, useful for operation with a single finger and including Caps Lock, Shift Lock, Ctrl Lock, Alt Lock, and Num Lock, can be placed around the alphabet input region 1. These two- state locking keys behaves as follows: when it is clicked, the keyboard will enter into a state in which the function is locked temporarily and when the corresponding shift key is used (i.e., with one click), the locking for that function is automatically unlocked. Only when the two state locking key is double clicked, the function of that key will be locked at a deeper level, and can only be released after the corresponding shift key is used for several times and the two state locking key is clicked. Such a setting can be implemented with a logic circuit. The two-state locking keys are helpful for operation with a single finger.
14. The keyboard of the present invention can also have some auxiliary technical features: in the alphabet keys area, the alphabet-key array can be tilted and staggered orderly as required double-letter assignment on a same key can be used to reduce the size of the alphabet-key matrix. However, the alphabet key area shall not be smaller than a 4×4 key matrix or have less than 16 alphabet-keys. The number keys and symbol keys can share some key assignment with the alphabet letters in the alphabet-key matrix. Number key zone **10,** symbol key zone **11,** navigation and edit key zone **13,** and function key zone **12** as well as mouse device **14** and some auxiliary clicking keys can be placed above or below the alphabet key area **1.** Function keys F1-F12 can be placed above or left to the alphabet key area **1.** The keyboard of some standalone peripheral devices may be mounted with a secondary display screen, storage device, and micro hard disk. As an accessory device for the keyboard, the mouse device can be a mouse track ball, mouse touch panel, mouse control level, or a newer infrared touch mouse, etc.
15. The hardware of the keyboard can be manufactured based on the present-day designs for existing OEM components, and designed to be compatible to existing software. The keyboard can be manufactured with reference to existing computer keyboard techniques and mobile phone keyboard techniques, thereby producing an integrated keyboard applicable to information terminals and peripheral devices.
16. When the keyboard of the present invention is to be used as a separated peripheral device, its functions can be enhanced by using existing software and available technologies, e.g., USB interface technology, wireless, infrared and Blue Teeth transmission technologies, to implement data exchange between the keyboard and the information terminals or devices. Furthermore, external USB port, external storage port, and display device can be added to the keyboard. Thus, based on the existing technologies, the general-purpose keyboards with a vertical design according to the present invention can not only deliver the functions of traditional general-purpose keyboards but also integrate mouse, font database for different languages, and mobile storage, etc.

The present invention provides the following benefits:
1. The overall key arrangement on the keyboard can be flexible: since the alphabet input region comprises the center module of core key-group **4** and the module of dissociable marginal key-group **8,** the structure, shape and key distribution of the alphabet input region can be implemented as a n x m matrix in various ways so the keyboard can be suitably used with a variety of information terminals and peripheral devices.
2. The keyboard features a unique and high-performance central module of core key-group. In particular, the preferred central module 4A (with a 4 x 4 key matrix) contains the 16 keys with the highest click percentages. With the unique key arrangement that balances input needs for both the Chinese language and the western languages, the user can quickly get familiar with any keyboards implemented according to the present invention. Whether it is for inputting the Chinese language or a Western language, the finger movement distance is minimized and the click operation is smooth and efficient.
3. The alphabet-key arrangement on the keyboard is ideal for inputting Chinese and western languages, easy to learn and memorize, and ensure smooth and agile click operations. For English, in the preferred central module 4A, a number of words, affixes, and commonly used letter combinations are discernable along the rows. For Chinese phonetic alphabet, the six keys 'E', 'A', ' I ', 'O', 'U', and 'N' in the core key-group complex 5 plus key 'G' adjacent to key 'N' cover almost all vowels and compound vowels of Chinese syllables. This facilitates easy operation and mind-retention of key positions.
4. The keyboard expands the alphabet-keys and brings convenience to input of different languages. The present invention calls for adding four tone/accent mark keys to the traditional concept of 26-key alphabet key area. The alphabet input region has 30 keys to meet the demand for keyboard globalization.
5. The keyboard is designed on the principle of "people first" and supports operation with a single hand or with thumbs in a leisurely manner. As the alphabet input region 1 has 4 to 6 columns of keys, orientated vertically, the keyboard can be covered by a single hand and the thumb. For the convenience of single hand operation, the present invention calls for implementation of double-state locking keys: Shift Lock, Caps Lock, Num Lock and Alt Lock on the key board, conferring new functions on conventional keys.
6. The keyboard may be added with a mouse device that can be controlled with a thumb. The mouse device is placed in lower part or at lower right corner of the keyboard to meet ergonomic requirements for confirmable operation. Incorporation of both inputting keys and clicking device in the keyboard greatly enhances the man-machine interaction functions.
7. The keyboard of the present invention is suitable for design of miniature and mobile keyboards for portable applications. The keyboard may have a vertical design and meet the developing trend of handheld information terminals. It can also meet the demand for input on existing desktop PC computers and notebook computers in a leisurely setting, for input on tablet PCs and handheld mobile information terminals such as PDAs and mobile phones, and for input of complicated information taking place on the man-machine interaction at Internet terminals.
8. The way of the keyboard is used and installed according to the present invention can help meet ergonomic and visual aesthetic demand as it places no limit on various innovative designs of the structure and appearance of the keyboard. Taking advantage of modern mobile phone keyboard design techniques, one can design the keyboard of the present invention easily in various shapes, backlight colors, luminous keys, and colors of shift keys so that the user can always clearly see the esthetic keyboard day or night.

### BRIEF DESCRIPTION OF DRAWINGS

FIG. 1 shows diagrams of the central module 4 in various embodiments of the present inventions.
FIG. 2 shows diagrams of three particular embodiments of the alphabet input region 1 according to the present invention.
FIG. 3 shows three particular embodiments of the keyboard according to the present invention.
FIG. 4 shows a keyboard of the present invention as used with a desktop PC.
FIG. 5 shows a keyboard of the present invention as used with a handheld tablet PC.
FIG. 6 shows a keyboard of the present invention as used with a vertically oriented notebook computer.
FIG. 7 shows a keyboard of the present invention as used with a PDA.
FIG. 8 shows a keyboard of the present invention as used with an intelligent mobile phone.
FIG. 9 shows a keyboard of the present invention as used with a handheld peripheral device.
FIG. 10 shows a keyboard of the present invention as used with a peripheral device to desktop computers.
FIG. 11 shows a keyboard of the present invention as used with a remote controller for household web TV terminal.
FIG. 12 shows a keyboard of the present invention as used with a desktop telephone.

### DETAILED DESCRIPTION OF PARTICULAR EMBODIMENTS

The numeric references used in the FIGs are defined as follows:
1: alphabet input region;
1A: a 7×4 alphabet input region;
1B: a preferred 6×5 alphabet input region;
1C: another 6×5 alphabet input region;
1D: a 5×6 alphabet input region;
2: core key-group;
3: high frequency alphabet-key group chain;
4: central module;
4A: a preferred central module;
5: core key-group complex;
6: central zone of the central module;
6A: a preferred central zone of the central module;
7: double-letter consonant key group chain;
8: marginal dissociable key group module;
9: tone/accent mark key group chain;
10: Number key group;
11: Symbol key group;
12: Function key group;
13: Navigation and edit key group;
14: Mouse device; and
15: Two-state locking key group.

FIG.1-1 - FIG.1-13 present 13 types of key arrangements for central module **4,** as examples to illustrate the positional relationship among the 2×2 core key-group **2,** the high frequency alphabet-key group chain **3,** the core key-group complex **5,** and the central zone **6** or **6A.** FIG. 1-1 shows an particular embodiment of the central module as a 3×3 key matrix, where there is a core key group **2** in the high frequency alphabet key group chain **3,** key 'N' is adjacent to group chain **3;** key 'G' is adjacent to key 'N', and key 'H' is on the same chain with key 'N' but separated by a vowel key. The mean click rate of the keys in the central module **4** is 63.5%. FIG. 1-2 shows a 3×3 key matrix with two overlapping core key groups **2** (the two overlapping core key groups are together referenced as core key group complex **5**), where key 'G' is adjacent to key 'N' and the mean click rate of the keys the central module **4** is 63.1 %. FIG. 1-3 shows a 3×4 key matrix with a core key-group complex **5,** where keys 'H' and 'G' are each side of the ' I ' and 'N' core, forming the central zone 6; the mean click rate for the central module **4** is 75%; FIG. 1-4 shows a 3×4 key matrix, which has a high frequency alphabet-key group chain 3 consisting of five vowel keys and adjacent key 'N' and there is a core-key group **2** inside group chain 3. The mean click rate of the central module **4** is 75.1 %. FIG. 1-5 shows a 4×3 key matrix, where two overlapping core key groups **2** form a core key group complex **5,** key 'H' is above key 'O', key 'G' is below key 'N', and the four keys are in the same line and pass through the core key group complex **5,** forming a vertically-oriented central zone **6** with a mean click rate of 79.2% for the central module **4.**

FIG. 1-6 - FIG.1-10 each show a 4×4 key matrix, including 16 keys with the highest click rate ('E', ' I ', 'A', 'N', 'O', 'S', 'T', 'U', 'R', 'H', 'L', 'D', 'G', 'M', 'C', and 'Y') in Chinese, English, and French, varying in key arrangement for each matrix. The mean key click rate of the matrix is 89.4%. FIG. 1-6 shows a high frequency alphabet-key group chain **3** with a core key group **2,** and between key 'N' and key 'H' there is a key column comprising **4** conjugated vowel keys 'E', 'O', 'A', and 'U', and the four consonant keys 'C', 'H', 'T', and 'S' are in the same column. FIG. 1-7 shows a high frequency alphabet-key group chain **3** where key 'N' is adjacent to four vowels (without 'U') and there is a core key group **2.** There are three vowel keys conjugated with 'H' and 'N'. FIG. 1-8 shows a horizontally oriented central zone **6,** in which 'O' and 'U' are above 'I' and 'N', and 'E' and 'A' are below 'I' and 'N'. FIG. 1-9 shows a high frequency alphabet-key group chain **3** with a core key-group **2,** wherein, 'N' is adjacent to four vowel keys (without 'U'), 'G' is adjacent to 'N', and 'H' is in the same line with 'N' and separated from 'N' by a vowel key. Here, only vowel keys 'O' and 'I' are the keys conjugated by 'H' and 'N'. FIG. 1-10 shows a preferred 4×4 key matrix central module **4**A, in which there is the preferred central zone **6**A oriented horizontally, forming many recognizable English words or affixes, such as 'in', 'to', 'sly', 'er', 'ing', and 'ly', thereby ensuring smooth and efficient input. The mean click rate of **4**A is 89.4%. FIG. 1-11 shows a 5×4 key matrix central module **4** with 20 alphabet-keys. There is a high degree of layout hierarchy: including core, core complex, chain of alphabet-keys with high click frequency, central zone, and double-letter consonant key group chain **7** aligned vertically. The mean click rate is 93.9% for the central module. FIG.1-12 shows a 4×5 key matrix central module with 20 alphabet-keys. It has a clear hierarchic layout: double-letter consonant key group **7** on the left and horizontally oriented central zone **6** can be seen clearly. The mean click rate for this central module is 94.4%. FIG.1-13 shows another central module **4,** which is at the theoretic key number limit of a 5×5 key matrix, including 25 alphabet-keys (just left out key 'Q'). It can be deemed as the largest central module **4,** formed by nested or overlapped layers: the core complex, the chain **3,** with double-letter consonant key chain **7** and the preferred central zone 6A in it. The mean click rate for this central module is 98.6%.

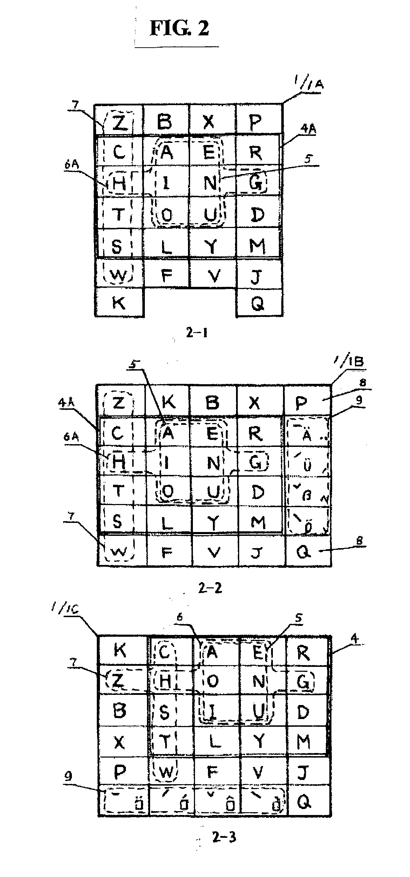

FIG. 2-1, FIG. 2-2, and FIG. 2-3 are illustrative diagrams showing key arrangement of the alphabet input region 1. The three drawings show three embodiments of the alphabet input region 1 commonly used. There are core key group complex **5,** a central zone **6** or **6**A, a central module **4** or **4**A, double-letter consonant key chain **7,** and tone/accent mark group chain **9.** FIG.2-1 shows a slim design of a 7×4 alphabet input region 1A, with the space key added in the bottom row. This arrangement is suitable for use on mobile phones. Four tone/accent mark keys can also be optionally added. FIG. 2-2 shows a preferred 6×5 alphabet input region 1B, which is suitable for use on information terminals and peripheral devices that support both Chinese and western languages. The 10 keys of marginal dissociable key-group module **8** are divided into upper and lower rows, placed above and below the central module 4A, respectively. The four keys of tone/accent mark key group chain **9** for Chinese phonetic tones/French accent marks/special German letters are placed in the right side of central module 4A. FIG. 2-3 shows a 6×5 alphabet input region 1C, where central module **4** is in the upper right corner, and the tone/accent mark key group chain **9** are placed in the left side of the bottom row.

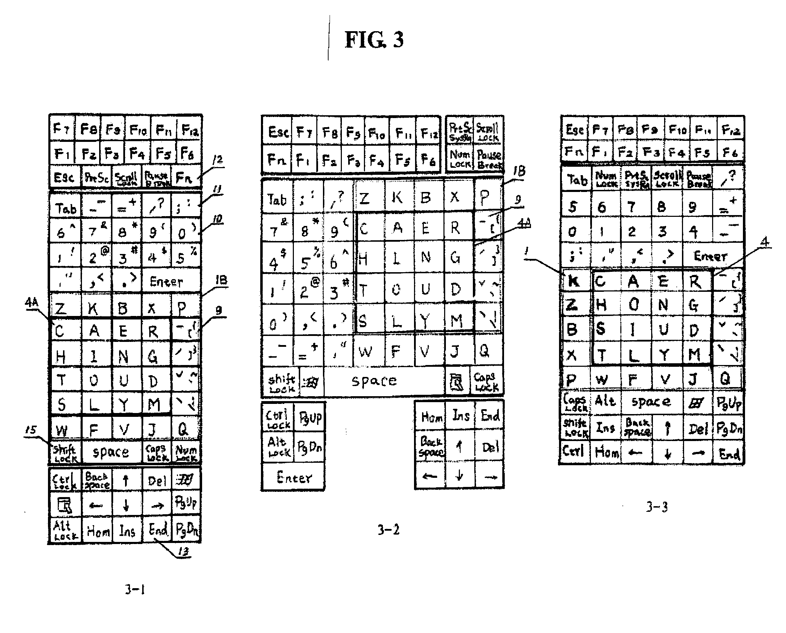

FIG.3-1, FIG.3-2, and FIG.3-3 are illustrative diagrams showing the key arrangement of the keyboard according to the present invention. They are typical embodiments of the keyboard structure of the present invention, comprising a central module **4** or **4**A in the alphabet input region **1.** FIG. 3-1 shows the structure of an 85-key keyboard, and the arrangement is suitable for use on all information terminals and peripheral devices. The alphabet input region **1B** is in the center of the keyboard, symbol key group **11,** number key group **10,** and function key group **12** are above **1B,** and two-state locking keys **15** and navigation and edit key group **13** are below **1B;** FIG.3-2 shows the structure of a wide-type 85-key keyboard, which is suitable for use on field information terminals and desktop peripheral devices. There are eight key columns in the central part of the keyboard. **1B** is at the center in the right part of the keyboard, with four keys of tone /accent mark key group chain **9** for tones used in Chinese, and the functions of the keys in group chain **9** are defined on corresponding symbol keys. The navigation and edit keys are at lower right corner of the keyboard. The function keys and Enter key are at the lower left corner. A space for the mouse device is reserved at lower center part. FIG.3-3 shows the structure of an 84-key keyboard, which is suitable for use on terminals mainly designed for learning Chinese language (e.g., electronic dictionary units). The alphabet input region 1 is in the central part of the keyboard, and the navigation and edit keys are in the bottom row.

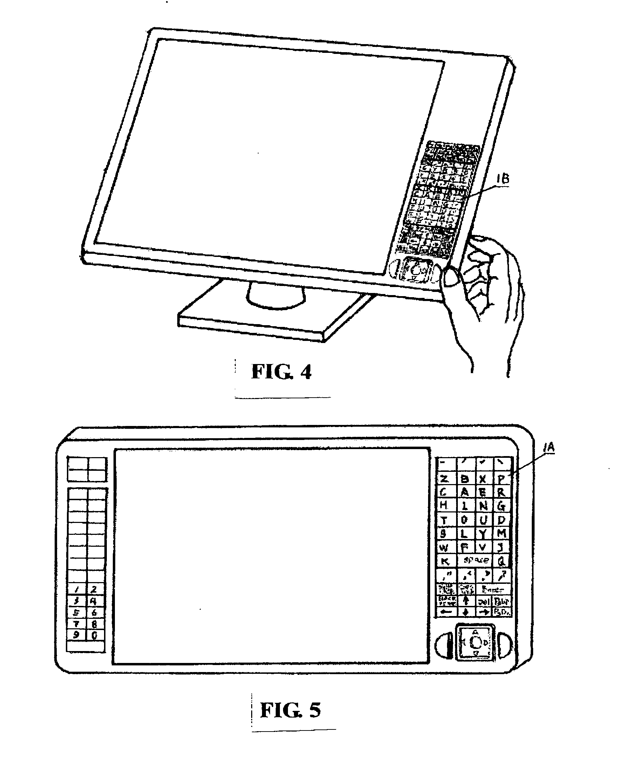

FIG. 4 - FIG. 12 shows nine keyboard embodiments of the present invention used in information terminals and peripheral devices. They illustrate the keyboard arrangements implemented through combinations of central module, the alphabet input region, and other keys; the overall appearance and positioning of integrated keyboard with mouse on the terminal and peripheral device. They show the advantages and benefits of the keyboard arrangement on information terminals and peripheral devices.

FIG.4 shows an embodiment of keyboard of the present invention used with a desktop PC, where the PC integrated with a LCD, which includes a keyboard with alphabet input region 1B and a mouse device. The user can support the body on the right elbow or forearm on the desktop and operate the keyboard with the right thumb comfortably and conveniently.

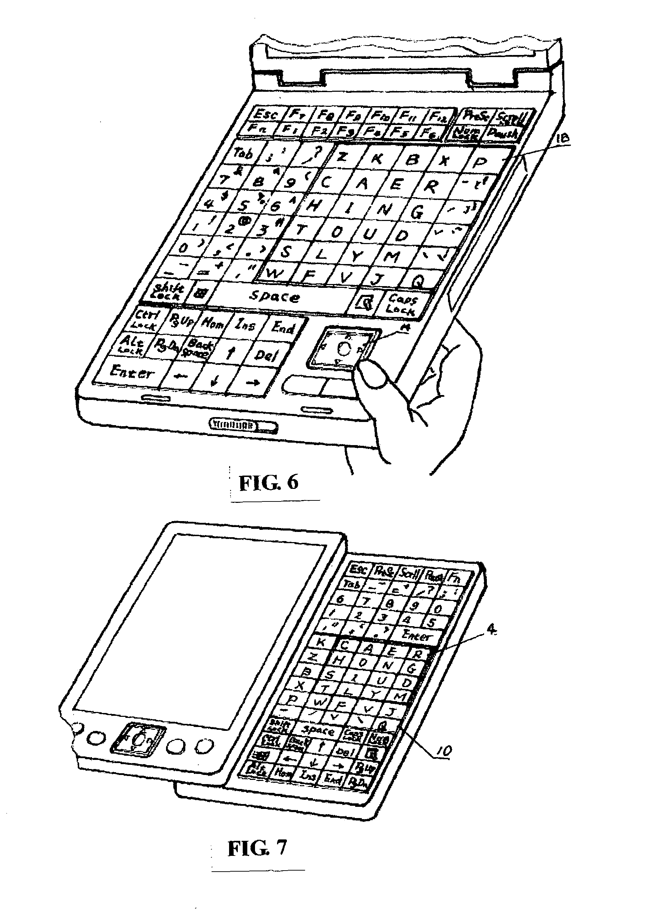

FIG.5 shows an embodiment of keyboard of the present invention used in a handheld tablet PC, where the tablet PC of a book size has a keyboard with alphabet input region 1A. The keyboard is divided into left and right areas. The user can hold the unit with both hands, and operate the keyboard mainly with the right thumb, using the left thumb for assistance.

FIG.6 shows an embodiment of keyboard of the present invention used in a vertically oriented notebook computer, which can be laid in a longitudinal direction on a lap with a wide 85-key keyboard. The keyboard has alphabet input region 1B and mouse device 14 in the lower right part of the keyboard. The user can lay the computer on the right lap and touch the mouse with the right thumb.

FIG.7 shows an embodiment of keyboard of the present invention used in a PDA, which employs a keyboard with alphabet input region 1C suitable for learning and inputting Chinese language. Compared to with the preferred central module **4**A, the central module **4** in the alphabet input region **1**C has 'T' switched position with 'S', and 'I' switched position with 'O'.

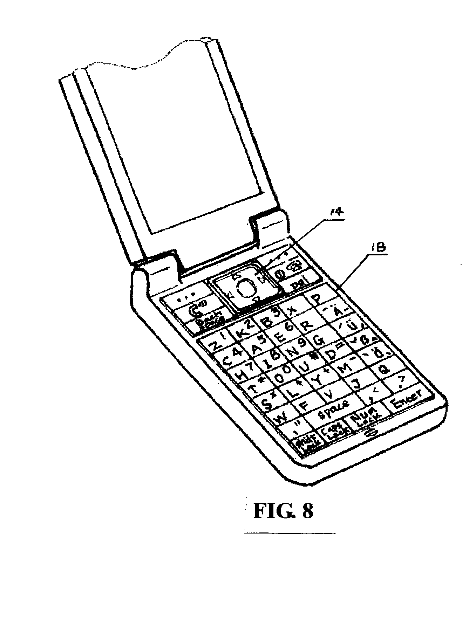

FIG.8 shows an embodiment of keyboard of the present invention used on an intelligent mobile phone, which has a keyboard with alphabet input region 1B, with number and symbol keys superimposed on the keys in the alphabet keys area. On the four tone/accent mark keys, the Chinese phonetic tone is marked in upper left part, the special German letter is marked in the central part, and the French tone mark is marked in the lower right part. The mouse device 14 is placed in upper center part, or in lower center part.

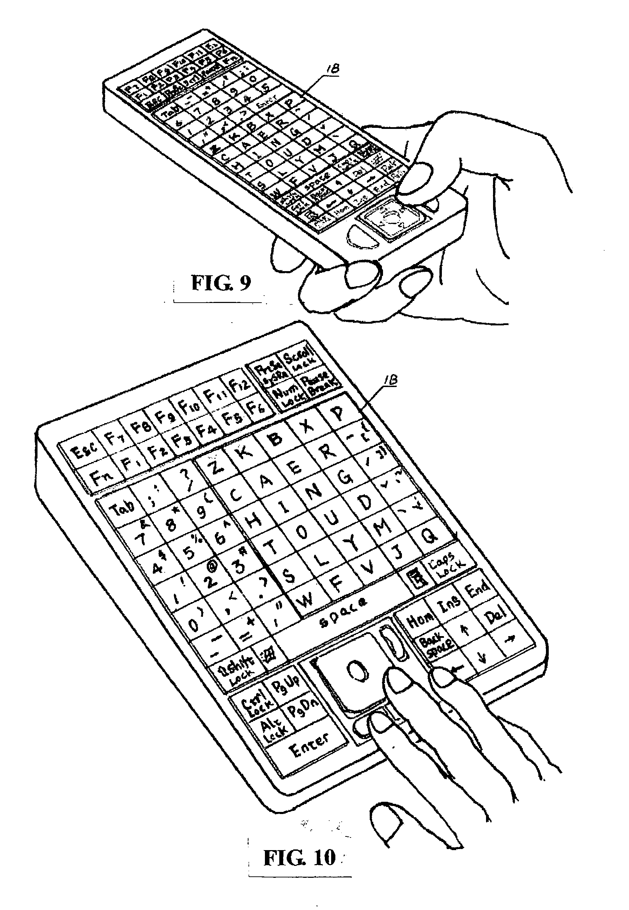

FIG.9 shows an embodiment of keyboard of the present invention used in a handheld peripheral device, wherein a wireless peripheral device - handheld micro integrated keyboard having integrated keyboard and mouse-can be held in hand and operated in a leisurely manner. It has a keyboard with alphabet input region 1B, with the mouse device mounted on the bottom part of the keyboard.

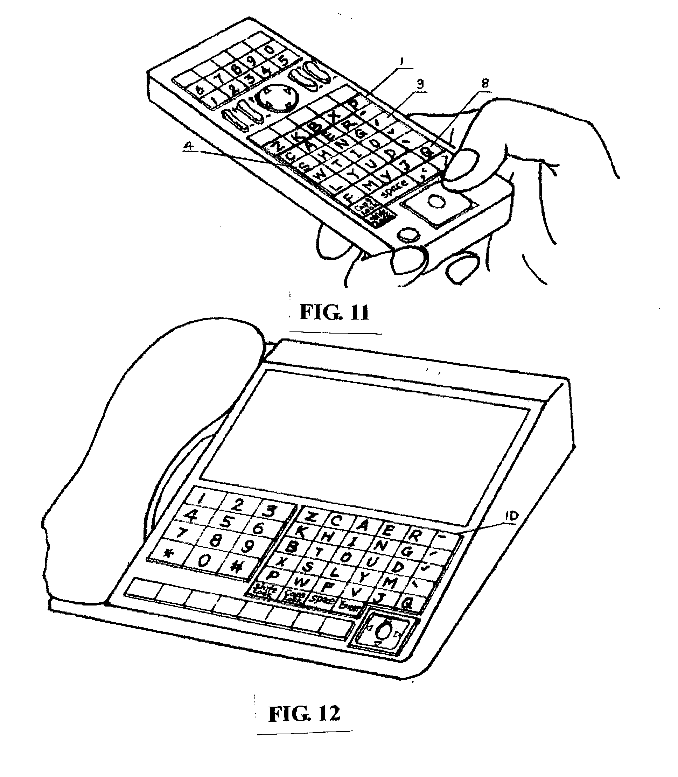

FIG. 10 shows an embodiment of keyboard of the present invention used in a desktop peripheral device, where the desktop peripheral device with an integrated keyboard, employing a wide 85-key keyboard with the alphabet input region 1B and a mouse device mounted in lower center part of the keyboard. The keyboard is mainly used with left and right middle fingers.

FIG.11 shows an embodiment of keyboard of the present invention used in a remote controller for home network TV terminal. As modem network TV service requires a large amount of man-machine interaction, the remote controller, as a peripheral device of the information terminal, also requires a keyboard system that integrates keyboard and mouse. The remote controller shown in the drawing employs another typical alphabet keys area which, although has no central module, core key group complex, or central zone, includes a high frequency key group chain 3 where there are five vowel keys 'A', 'E', ' I ', 'O', and 'U' and key 'N', with 'G' adjacent to 'N', and double-letter consonant key group chain **7** where there are five alphabet-keys 'S', 'T', 'C', 'Z', and 'W', and key 'H', with 'H' adjacent to 'N' and in the same line with 'N' and 'G'. The alphabet input region 1 comprises central module **4,** marginal dissociable key group 8, and four keys of tone/accent mark key group 9. The mouse device is mounted below the alphabet input region 1 on the remote controller.

FIG.12 shows an embodiment of keyboard of the present invention used in a desktop telephone, where the telephone has a network access and email and short message sending/receiving functions. Thus, the telephone is mounted with a keyboard with the alphabet input region 1D, and the mouse device is mounted at the lower right corner of the keyboard.

## Claims

1. A keyboard used in the information terminal, wherein, in the alphabet input region (1) with the same ranks of alphabet keys, the chain of alphabet keys with high click frequency 3 is consist of at least four of the five vowel keys 'A', 'E', ' I ', 'O', 'U' and key 'N'; key 'G' is adjacent to key 'N' in said chain; said alphabet input region (1) comprises at least the module of main key-group (4) and the marginal key-group (8) out of main key group.

2. The keyboard used in the information terminal as in claim 1, wherein, in the chain of alphabet-keys with high click frequency (3) in said alphabet input region (1), have a 2×2 array, it is the core of main key-group (2) is formed by three vowel keys and key 'N'; key 'G' is adjacent to key 'N' in that core; key 'H' is in the same line with key 'N' and 'G".

3. The keyboard used in the information terminal as in claim 1, wherein, in said alphabet input region (1), at least four of the five alphabet-keys 'S', 'T', 'C', 'Z', and 'W' are in the same line with key 'H", which forms the chain of double-letter consonant keys (7), in said chain (7), key 'H' is adjacent to key 'N' directly or separated by a key in the line.

4. The keyboard used in the information terminal as in claim 1, wherein, in the chain of alphabet-keys with high click frequency(3) in said alphabet input region (1), the five vowel keys 'A', 'E', ' I ', 'O', and 'U' are arranged in a "C" structure and embrace key 'N' in the opening, forming a 3×2 array, it is the core cluster of main key-group (5); at the opening of "C" structure in that heart, key 'G' is adjacent to key 'N'; key 'N' is in the same straight line with key 'N' and 'G' opposite to the opening of "C" structure, separated by a vowel key, which forms the central zone of main key-group 6 with eight alphabet-keys.

5. The keyboard used in the information terminal as in claim 1, wherein, in said alphabet input region (1), either of key 'E' and 'A' is held in middle by the counterpart and key 'R'; key 'L', 'Y', and 'M' are adjacent in arrange; at least four of key 'Z', 'K', 'B', 'X', and 'P' are adjacent in the same line.

6. The keyboard used in the information terminal as in claim 1, wherein, there is a 4×4 array model of main key-group (4) on the keyboard, which can be the optimal model of main key-group (4A) composed as follows: first row: 'C', 'A', 'E', and 'R'; second row: 'H', 'I', 'N', and 'G'; third row: 'T', 'O', 'U', and 'D'; fourth row: 'S', 'L', 'Y', and 'M'; said the model of main key-group (4) or (4A) composes with said marginal key-group (8) out of main key group and the keys of tone mark (9) into said alphabet input region (1), which is at least 4 rows × 4 columns and can be in a variety of shapes.

7. The keyboard used in the information terminal as in claim 1, wherein, there is a 7×4 alphabet input region (1A), which is composed as follows: first row: 'Z', 'B', 'X', and 'P'; second row: 'C', 'A', 'E', and 'R'; third row: 'H', 'I', 'N', and 'G'; fourth row: 'T', 'O', 'U', and 'D'; fifth row: 'S', 'L', 'Y', and 'M'; sixth row: 'W' 'F', 'V', and 'J'; seventh row: 'K', space, space, and 'Q'.

8. The keyboard used in the information terminal as in claim 1, wherein, there is a 6×5 alphabet input region (1B) with four keys of tone mark (9); said alphabet input region (1B) is composed as follows: first row: 'Z', 'K', 'B', 'X', and 'P'; second row: 'C', 'A', 'E', 'R', and '-'; third row: 'H', 'I', 'N', 'G', and '/'; fourth row: 'T', 'O', 'U', 'D', and 'v'; fifth row: 'S', 'L', 'Y', 'M', and '\'; sixth row: 'W', 'F', 'V', 'J', and 'Q'.

9. The keyboard used in the information terminal as in claim 1, wherein, said keyboard has two-condition locking keys (15) such as Shift Lock and Caps Lock as well as a mouse device (14) outside of said alphabet input region (1).

10. An arrangement of the keyboard used in information terminal, wherein, in the alphabet input region (1), the chain of alphabet keys with high click frequency 3 is consist of at least four of the five vowel keys 'A', 'E', 'I ', 'O', 'U' and key 'N' in arrange; the chain of double-letter consonant keys 7 is consist of At least four of the five alphabet-keys 'S', 'T', 'C', 'Z', 'W' and key 'H', in which at least five keys are in arrange; key 'G' is adjacent to key 'N' which is in the chain of alphabet keys with high click frequency 3; key 'H' is in the same line with key 'N' and 'G'; said alphabet input region (1) is comprised of a model of main key-group (4) in n rows and m columns (n and m are any of 3, 4, and 5, respectively) composed of at least said chain of alphabet-keys with high click frequency(3) and the marginal key-group(8) out of main key group; keys of tone mark (9) can be added to above two parts as required, to form said alphabet input region (1), which is in at least 4 rows or 4 columns and can be in a variety of shapes; the four keys of tone mark (9) are arranged adjacent together in the same straight line in the alphabet input region, and compose with said the model of main key-group (4) and the marginal key-group (8) into a 6×5 alphabet input region (1B) with 30 keys or a 5×6 alphabet input region (1D) with 30 keys.
